# EUROPÄISCHE PATENTSCHRIFT

(11) **EP 2 289 823 B1**
(45) Veröffentlichungstag und Bekanntmachung des Hinweises auf die Patenterteilung: **23.05.2012**
(21) Anmeldenummer: 10405139.6
(22) Anmeldetag: 19.07.2010
(51) Int. Cl.: B65G 15/60, B65G 17/24, F16C 29/06

(54) **Stützvorrichtung für eine Fördereinrichtung und Verfahren zum Betrieb einer Fördereinrichtung**
Support device for a conveyor and method for operating said conveyor
Support pour convoyeur et méthode de fonctionnement du convoyeur

(30) Priorität: 24.08.2009 CH 13082009
(43) Veröffentlichungstag der Anmeldung: 02.03.2011
(73) Patentinhaber: WRH Walter Reist Holding AG, 8272 Ermatingen (CH)
(72) Erfinder: Ruge, Martin, 4656 Starrkirch-Wil (CH)
(74) Vertreter: Frei Patent Attorneys

(56) Entgegenhaltungen:
- DE-U1-202007 011 352
- FR-A1- 2 271 442
- GB-A- 403 082

## Beschreibung

Die Erfindung bezieht sich auf das Gebiet der Fördertechnik. Sie bezieht sich auf eine Stützvorrichtung für eine Fördereinrichtung und ein Verfahren zum Betrieb einer Fördereinrichtung gemäss dem Oberbegriff der entsprechenden unabhängigen Patentansprüche.

### STAND DER TECHNIK

Es ist bekannt, Fördervorrichtungen mit Linearführungen mit umlaufenden Rollen zu versehen. Solche Fördervorrichtungen weisen einen Rollenkörper auf, mit einer Folge von Rollen, welche entlang einer Bahn rollen, so dass der Rollenkörper in einem Stützbereich die geförderten Gegenstände stützt, wobei die Rollen im Stützbereich auf einer Stützfläche abrollen. Bestimmte Arten von Linearführungen, wie in der DE 20 2007 011 352 U1 für Schubladen beschrieben, sind für kleine Belastungen ausgelegt. DE 20 2007 011 352 U1 offenbart ein Verfahren zum Betrieb einer Fördereinrichtung gemäß dem Oberbegriff des Anspruchs 1 und eine Stützvorrichtung für eine Fördereinrichtung gemäß dem Oberbegriff des Anspruchs 7. Die relativ geringen auftretenden Kräfte und die verwendeten Materialien sind aufeinander abgestimmt, so dass keine nennenswerter Verschleiss der bewegten Teile auftritt. Aus dem Werkzeugmaschinenbau sind ebenfalls Linearführungen bekannt, wobei wegen den auftretenden hohen Kräften Wälzkörper aus Stahl verwendet werden. Es besteht ein Bedürfnis, ähnliche Führungen für die Fördertechnik bereitzustellen, welche als Stützvorrichtung für bewegte Körper einsetzbar sind, wobei hohe Lastkräfte aufzunehmen sind und gleichwohl möglichst kostengünstige, leichte Wälzkörper verwendbar sein sollen.

### DARSTELLUNG DER ERFINDUNG

Es ist deshalb Aufgabe der Erfindung, ein Verfahren zum Betrieb einer Fördereinrichtung und eine Stützvorrichtung für eine Fördereinrichtung der eingangs genannten Art zu schaffen, welche die Beanspruchung der beweglichen Elemente der Fördereinrichtung, insbesondere der Wälzkörper, verringert. Eine weitere Aufgabe ist, die Möglichkeit von Fördereinrichtungen mit kostengünstigen Leichtbaukomponenten zu schaffen.

Diese Aufgabe lösen ein Verfahren zum Betrieb einer Fördereinrichtung und eine Stützvorrichtung für eine Fördereinrichtung mit den Merkmalen der entsprechenden unabhängigen Patentansprüche.

Gemäss dem Verfahren zum Betrieb einer Fördereinrichtung werden also beim Abrollen der Rollen im Stützbereich einer Stützvorrichtung einer Fördervorrichtung die folgenden Schritte ausgeführt:
■ Entlasten der Rollen beim Eintreten in einen Teilbereich des Stützbereiches;
■ Ausrichten der entlasteten Rollen;
■ erneutes Belasten der Rollen beim Verlassen des Teilbereiches des Stützbereiches.

Bei der Entlastung der Rollen wird die Lastkraft durch andere Stützelemente übernommen. Dies können beispielsweise weitere Rollen desselben Rollenkörpers sein, oder zusätzliche stationäre Rollen oder umlaufende Rollen, oder Gleitelemente. Die Entlastung kann geschehen, indem die Rollen im Stützbereich in einer Vertiefung laufen und somit vorübergehend nicht mehr gestützt sind, und/oder indem die geförderten Gegenstände durch die anderen Stützelemente vorübergehend angehoben werden. Der Begriff "anheben" bezieht sich hier, gemäss der üblichen Verwendung der Erfindung, auf die Richtung der Schwerkraft; allgemein gesprochen vergrössern die anderen Stützelemente den Abstand zwischen den geförderten Gegenständen und der Stützfläche vorübergehend. Beispielsweise geschieht dies, indem ein Band oder eine Mattenkette oder ein gefördertes Stückgut durch die anderen Stützelemente etwas angehoben wird, und dadurch eine oder mehrere der auszurichtenden Rollen entlastet werden.

Das Verfahren verhindert die negativen Auswirkungen davon, dass die Rollen aufgrund von Fertigungstoleranzen nichtideal abrollen und dadurch verkanten, verklemmen oder seitlich wegdriften und sich dadurch übermässig abnutzen. Beispielsweise können Kunststoffrollen aus Massenfertigung leicht konisch sein und deshalb die Tendenz aufweisen, seitlich von der Förderrichtung wegzurollen. Indem die Rollen einmal oder mehrmals entlang des Stützbereichs wieder ausgerichtet werden, wird vermieden, dass sie in eine Lage gedrängt werden, in welcher sie sich zu sehr abnutzen.

Wenn der Rollenkörper endlos in der Stützvorrichtung umläuft, so liegt der Stützbereich mit den Entlastungsbereichen im Lasttrum. Der Rücktrum ist in der Regel unbelastet, so dass dort keine Entlastung erforderlich ist. Falls auch der Rücktrum belastet ist, d.h. falls die Stützvorrichtung sich an beiden Seiten jeweils zumindest zeitweise entlang eines Körpers bewegt, welcher gegen die Stützvorrichtung drückt, dann ist vorzugsweise auch mindestens ein Teilbereich zur Entlastung auch im Rücktrum angeordnet.

Die Stützvorrichtung zum Stützen von geförderten Gegenständen weist einen Rollenkörper mit einer Folge von Rollen auf, welche entlang einer Rollenbahn laufen und in einem Stützbereich der Rollenbahn die geförderten Gegenstände stützen. Dabei rollen die Rollen im Stützbereich auf einer Stützfläche ab. Es liegt im Stützbereich im genannten Teilbereich zur Entlastung mindestens eine Vertiefung der Stützfläche vor, wobei eine Rolle, welche sich im Bereich der Vertiefung befindet, in die Vertiefung hinein bewegbar ist.

Dadurch sind Lastkräfte, welche auf die Rollen wirken, im Bereich der Vertiefung reduziert. Vorzugsweise wirkt dort gar keine Lastkraft auf die Rollen. Die Rollen verlieren also jeweils im Bereich der mindestens einen Vertiefung im Wesentlichen den Kontakt zu den geförderten Gegenständen, beispielsweise einem Fördermittel. Dadurch sind die Rollen entlastet, so dass sich die Richtung der Drehachse der Rollen leichter korrigieren lässt. Dadurch kann sich eine Rolle, falls sie verkantet war, das heisst, wenn die Richtung ihrer Drehachse nicht senkrecht zu ihrer Abrollrichtung respektive zur Förderrichtung war, wieder senkrecht zur Förderrichtung ausrichten. Die Drehachse der Rollen ist beispielsweise definiert, indem die Rollen zylindrisch oder tonnenförmig geformt sind. Die Abrollrichtung bezeichnet hier und im Folgenden die translatorische Bewegungskomponente des Schwerpunkts einer abrollenden Rolle.

Dies hat den Vorteil, dass Rollen, welche sich - je nach Belastung und je nach Nichtidealitäten in der Form der Rollen, der Lagerung der Rollen und der Stützflächen - nach einer gewissen Strecke unter Last verkanten, wieder ausgerichtet werden. Damit wird verhindert, dass die verkanteten Rollen mit ihren Achsen und/oder ihren Umfangsflächen und/oder mit ihren Stirnflächen an ihren Führungen schleifen und einen übermässigen Abrieb bewirken. Dadurch wiederum wird es möglich, Rollen und Führungen aus kostengünstigen und leichten Materialien herzustellen.

Die erfindungsgemäss betriebene Stützvorrichtung ist vor allem für einen nichtzyklischen, spontanen Förderbetrieb, also ohne Dauerbelastung der Komponenten geeignet. Damit werden die Anforderungen an die Komponenten weiter verringert. Die Richtung, in welcher die Last auf die Stützvorrichtung und damit, via die Rollen, auf die Stützfläche wirkt, ist in der Regel die Richtung der Schwerkraft. Im Folgenden werden, der Einfachheit der Beschreibung halber, die Erklärungen vor allem in diesem Sinne vorgenommen. Die Erfindung ist aber natürlich auch bei anderen Richtungen der Belastung sinngemäss einsetzbar. Das heisst, dass beispielsweise die Last in horizontaler Richtung (oder schräg) wirkt, und die Stützfläche im wesentlichen normal zur Richtung der Last verläuft.

Das Ausrichten der Rollenachsen kann durch einen der folgenden Effekte, oder durch eine Kombination dieser Effekte geschehen:
- Beim Hineinrollen oder Hineingleiten der Rolle in die Vertiefung wird die Rolle entlastet und richtet sich parallel zur Vertiefung aus. Das Hineinbewegen in die Vertiefung kann dabei durch die Schwerkraft und/oder durch eine Führung der Rollen verursacht respektive getrieben sein.
- Beim wieder Hochfahren aus der Vertiefung heraus wird die Rolle gegen die aufwärts verlaufende Stützfläche geschoben oder gezogen und wird dadurch parallel zur Vertiefung ausgerichtet. Das Ausrichten ist also durch eine mechanische Führung der Rollen getrieben.
- Mittels seitlicher Bahnverengungen, welche an den Stirnseiten der Rolle angreifen und die Rollen seitlich in eine vorgegebene Lage (vorzugsweise in der Mitte der Rollenbahn) drängen und dabei auch die Achsrichtung der Rollen ausrichten. Vorzugsweise sind dabei die Stirnseiten der Rollen parallel zu Flächen der Bahnverengungen.

In einem Querschnitt durch die Vertiefung, in einer Schnittebene senkrecht zur Förderrichtung oder Abrollrichtung der Rollen, korrespondiert die Form der Vertiefung vorzugsweise im wesentlichen mit der Umfangskontur einer Rolle (in einem Längsschnitt entlang der Drehachse der Rolle gesehen). In einer bevorzugten Ausführungsform der Erfindung ist die Vertiefung im Bereich der Enden der Rolle, also in Bereichen beiderseits der Mittellinie der Rollenbahn, etwas stärker ausgeprägt, d.h. etwas tiefer als in der Mitte. Dadurch wird es leichter, die Achsrichtung der Rollen zu drehen.

Vorzugsweise weist die Vertiefung, in einem Längsschnitt entlang der Förderrichtung oder Abrollrichtung der Rollen gesehen, einen stetigen Verlauf auf. Diese bedeutet, dass die Rollen sich beim Hineinfahren oder Hineinrollen und Hinausfahren oder Hinausrollen aus der Vertiefung nicht ruckartig aufwärts oder abwärts bewegen.

Vorzugsweise ist die Vertiefung, in einem Längsschnitt entlang einer Förderrichtung oder Abrollrichtung der Rollen gesehen, symmetrisch geformt. Ungeachtet der Bewegungsrichtung des Rollenkörpers und der Rollen (vorwärts oder rückwärts) verläuft also die Entlastung und Ausrichtung der Rollen in gleicher Weise. Vorzugsweise weist die Vertiefung, entlang der Förderrichtung oder Abrollrichtung der Rollen gesehen, eine Ausdehnung von weniger als dem Dreifachen, vorzugsweise weniger als dem Doppelten des Durchmessers einer Rolle auf.

In einer bevorzugten Ausführungsform der Erfindung sind die Rollen an vorstehenden Achszapfen der Rollen gelagert und geführt, indem diese Achszapfen in seitlichen Führungsnuten des Stützkörpers laufen. Die Achszapfen können einstückig an den Rollen ausgebildet sein, oder durch separate Achsteile, welche in die Rollen eingesetzt sind. In einer anderen bevorzugten Ausführungsform der Erfindung sind die Rollen in einem flexiblen Verbindungskörper gelagert, welcher ebenfalls in einer Führungsnut gelagert sein kann, entweder auch mittels vorstehender Achszapfen der Rollen, oder mittels vorstehender Achselemente des Verbindungskörpers, welche in Aussparungen der Rollen hinein ragen. Dieser flexible Verbindungskörper kann auch eine Beabstandung der Rollen bewerkstelligen. In einer weiteren bevorzugten Ausführungsform der Erfindung sind die Rollen beabstandet, indem kleinere, mitlaufende Distanzierungsrollen vorliegen, welche an den Rollen rollen (in Gegenrichtung), aber nicht an der Stützfläche oder an den geförderten Gegenständen abrollen. Diese Distanzierungsrollen sind vorzugsweise ebenfalls mittels Achszapfen in derselben Führungsnut wie die anderen Rollen geführt. Die Achszapfen der Rollen und Distanzierungsrollen können zur Verringerung der Reibung auch mit eigenen Wälzlagern versehen sein.

Die Rollen sind vorzugsweise am Übergang zwischen ihren Stirnseiten und der Umfangsfläche (also der abrollenden Fläche) eine Abrundung oder eine Fase auf. Diese erleichtert die Ausrichtung der Rollen an den Bahnverengungen und vermeidet ein Verklemmen.

In einer bevorzugten Ausführungsform der Erfindung liegen Bahnerweiterungen vor und/oder nach den Bahnverengungen vor, wo die Rollen auch in der Richtung entlang ihrer Drehachsen eine etwas grössere Bewegungsfreiheit erhalten, welche eine Ausgleichsbewegung zum Ausrichten der Rollenachsen unterstützt. In einer weiteren bevorzugten Ausführungsform der Erfindung liegt im Bereich der Vertiefung nur eine Bahnerweiterung vor und keine Bahnverengung; die Rollen werden dann im Bereich der Vertiefung ausgerichtet und bei der anschliessenden (relativen) Verengung auf die normale Breite der Rollenbahn gegebenenfalls seitlich ausgerichtet.

Bei der Anwendung der Stützvorrichtung in der Fördertechnik kann das Fördergut im Prinzip direkt auf die Rollen geführt werden, so dass die Rollen am Fördergut abrollen. Der geförderte Gegenstand ist dabei also gleich dem Fördergut, also Stückgut, Trägem oder Behältern etc.. Vorzugsweise liegt aber ein Fördermittel vor, beispielsweise ein Förderband oder eine Mattenkette, an welchen die Rollen abrollen, und auf welchem das Fördergut gefördert wird. Mit dem Begriff "Mattenkette" werden hier und im Folgenden, in zusammenfassender Weise, verkettete Fördermittel wie beispielsweise Mattenketten, Scharnierbandketten, Plattenbandketten (flexbelts, chain belts, carrier chains) bezeichnet. In diesem Fall ist also der geförderte Gegenstand gleich dem Fördermittel, und das Fördergut liegt auf dem Fördermittel. Es ist dabei auch möglich, dass zwischen einer Mattenkette und den Rollen ein mitbewegtes Schutzband angeordnet ist, welches die Rollen vor Schmutz schützt, welcher durch die Mattenkette hindurch fallen könnte.

Grundsätzlich sind die beschriebenen Vertiefungen überall dort verwendbar, wo stark belastete Rollen geschont werden müssen. Dies ist beispielsweise der Fall in Rollenelementen und angetriebenen Rollenelementen, wie sie in der EP-A-1725482 (US-A-2008/0245640), EP-A-1758801 (US-A-2008/0078158) und EP-A-1778568 (US-A-2007/0267278) beschrieben sind, und ebenso in Kombination mit Rollenbändern oder Verbindungskörpern mit eingesetzten Rollen, wie sie in der EP-A-1 858 782 (US-A-2008-0164124) und CH-701358, respektive deren Nachfolgeanmeldungen beschrieben sind. Den Vorrichtungen in den genannten Patentanmeldungen ist gemeinsam, dass sie auf leichtlaufende, aus leichten und günstigen Komponenten herstellbare Rollenkörper gerichtet sind. Insbesondere sind vorzugsweise Rollen und gegebenenfalls auch Verbindungskörper, in welchen die Rollen gelagert und beabstandet sind, aus Kunststoff hergestellt. Dem entsprechend ist, bei Verwendung mit hohen Belastungen, die Anwendung der vorliegenden Erfindung besonders vorteilhaft, um ein dauerndes Verkanten der Rollen und eine übermässige Abnutzung der Rollen und/oder der Verbindungskörper zu vermeiden.

Die Erfindung ermöglicht es, Stützvorrichtungen respektive Fördereinrichtungen bereitzustellen, welche einfach und kostengünstig herstellbar sind und gleichwohl hoch belastbar sind. d.h. höher, als sonst bei den verwendeten Materialien, beispielsweise Kunststoffrollen, üblich ist.

Die Bahn, in welcher die Rollen laufen, ist in bevorzugten Ausführungsformen der Erfindung eine Umlaufbahn, um welche die Rollen in einer geschlossenen Bahn umlaufen. In anderen Ausführungsformen der Erfindung ist die Bahn nicht geschlossen, und die Rollen wie auch die eventuell vorhanden Fördermittel führen hin- und her-Bewegungen aus. Die Stützfläche ist in weiteren bevorzugten Ausführungsformen der Erfindung nicht eben, sondern ist leicht gekrümmt, sei es konkav oder konvex. Vorzugsweise weisen auch die am Rollenkörper abrollenden Gegenstände eine korrespondierende, komplementäre Form auf.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Fördereinrichtung mit integrierter Abstützvorrichtung und einem Förderband;
- Figuren 2a-2b: eine Stützvorrichtung als Teil einer Fördereinrichtung, ohne Mittel zum Ausrichten von Rollen;
- Figur 3: einen Abschnitt eines Rollenkörpers;
- Figur 4: einen Ausschnitt eines Rollenkörpers;
- Figur 5a-5b: eine Stützvorrichtung mit einer Vertiefung zum Ausrichten der Rollen;
- Figur 6a-6b: ein Entlastungselement;
- Figur 7: das Ausrichten einer Folge von Rollen; und
- Figuren 8-9: Varianten eines Entlastungselementes.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

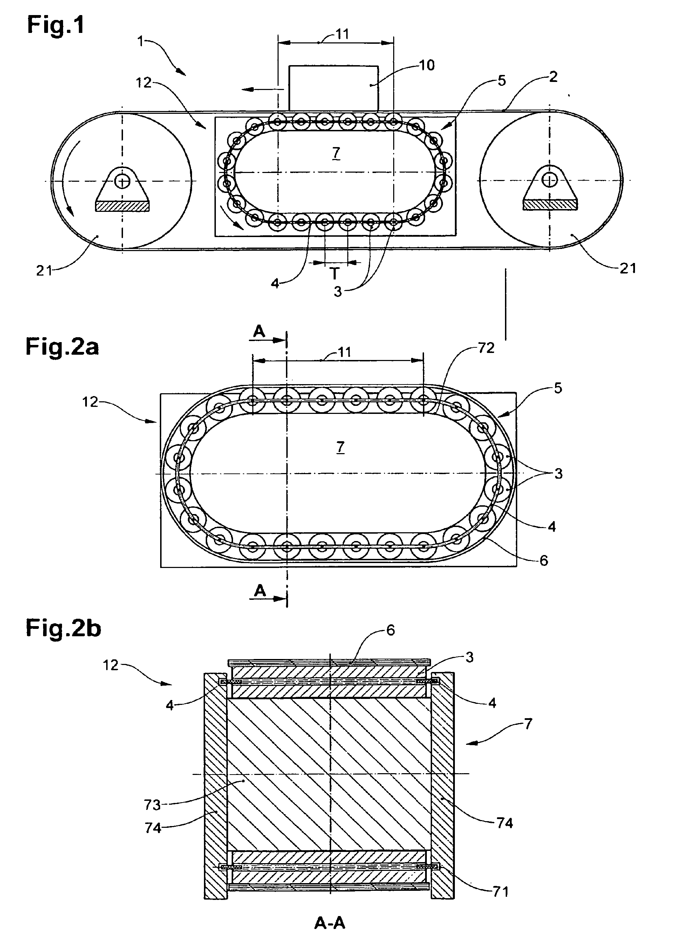

**Figur 1** zeigt beispielhaft eine Fördereinrichtung 1, in welcher die erfindungsgemässe Vertiefung zweckmässigerweise angeordnet werden kann. Jedoch ist die Erfindung auch mit anders gearteten Fördereinrichtungen und/oder Rollenkörpen einsetzbar. Die Figur 1 zeigt schematisch eine Fördereinrichtung 1 mit einem Förderband als Fördermittel 2 für Fördergut 10, hier beispielhaft als Stückgut dargestellt. Das Förderband wird um Umlenkrollen 21 geführt. Eine oder beide der Umlenkrollen 21 kann angetrieben sein. Entlang eines Stützbereiches 11 ist eine Stützvorrichtung 12 angeordnet, mit einem Rollenkörper 5, welcher um einem Stützkörper 7 umläuft. Der Rollenkörper 5 weist umlaufende Rollen 3 auf, und einen Verbindungskörper 4, welcher eine Lagerung für die Rollen 3 bildet und die Rollen 3 voneinander beabstandet. Das Fördermittel 2 bewegt sich in einer Förderrichtung bezüglich der Stützvorrichtung 12. Dabei rollen die Rollen 3 am Fördermittel 2 und am Stützkörper 7 ab. So ermöglicht die Abstützvorrichtung 12 eine hochbelastbare und reibungsarme Abstützung des Fördermittels 2. Der Abstand zwischen jeweils zwei hintereinander angeordneten Rollen 3 wird als Teilung T des Rollenkörpers 5 bezeichnet.

In einer anderen bevorzugten Ausführungsform der Erfindung (nicht illustriert) läuft der Rollenkörper 5 auch um die Umlenkrollen 21 um. In einer weiteren Ausführungsform der Erfindung ist der Rollenkörper 5 mehrteilig und weist mehrere nebeneinander verlaufende Verbindungskörper 4 mit Rollen 3 auf. Vorzugsweise ist der Rollenkörper 5 selber nicht angetrieben, sondern wird nur bei Bewegung des Fördermittels 2 mitbewegt. In anderen Ausführungsformen der Erfindung liegt als Fördermittel 2 eine Mattenkette anstelle des Förderbandes vor. In diesem Fall ist vorzugsweise die Teilung T von einer Teilung der Mattenkette verschieden, und vorzugsweise auch von einem ganzzahligen Vielfachen der Teilung der Mattenkette verschieden. Umgekehrt ist vorzugsweise auch die Teilung der Mattenkette von einem ganzzahligen Vielfachen der Teilung T des Rollenkörpers 5 verschieden. Vorzugsweise ist die Mattenkette mindestens in den Auflagebereichen gegenüber dem Rollenkörper 5 so eben ausgestaltet, dass möglichst grosse Auflagebereiche wirksam sein können.

**Figuren 2a** und **2b** zeigen einen Ausschnitt einer Fördereinrichtung 1, nämlich lediglich die Stützvorrichtung 12, jedoch mit zusätzlich einem Band 6. Das Band 6 kann die Funktion des Fördermittels 2 der Figur 1 übernehmen, oder es kann, bei Anordnung der Stützvorrichtung 12 unter einer Mattenkette, den Rollenkörper 5 vor Schmutz schützen, der durch die Mattenkette hindurch fallen kann. **Figur 2a** zeigt eine seitliche Ansicht bei entferntem Seitenelement 74, **Figur 2b** einen Querschnitt A-A im Bereich einer lasttragenden Stützfläche 72. Seitlich an den Zentralkörper 73 sind Seitenelemente 74 angeordnet, welche die Rollen 3 seitlich führen und, mit dem Zentralkörper 73, einen umlaufenden Führungskanal oder eine Rollenbahn bilden. Die Seitenelemente 74 weisen Führungsnuten 71 zur Führung des Verbindungskörpers 4 im Stützkörper 7 auf. In anderen Ausführungsformen der Erfindung dienen die Führungsnuten 71 zur Führung von Achselementen der Rollen 3.

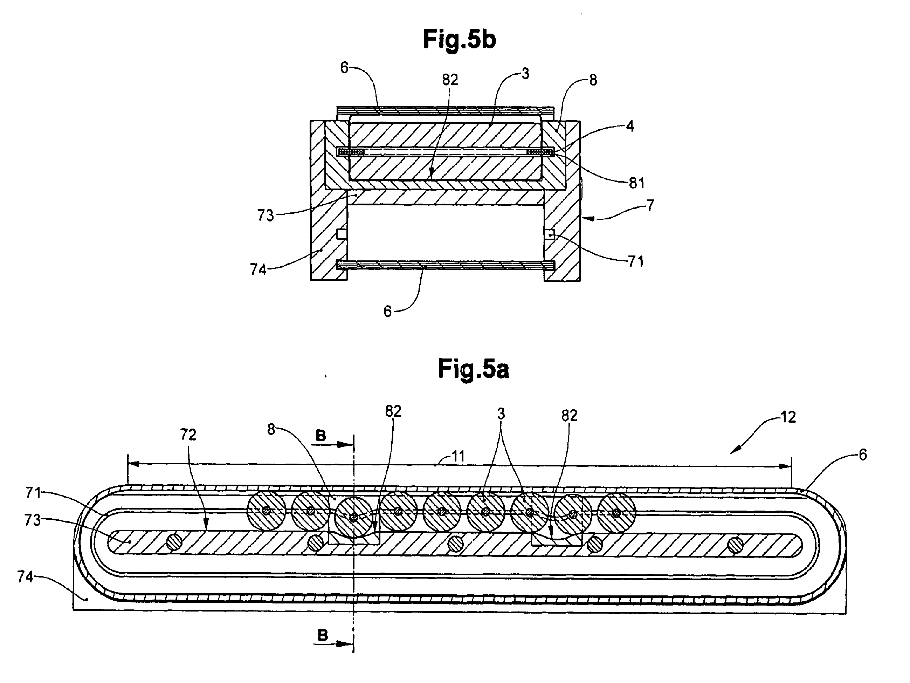

In den Stützvorrichtungen 12 der **Figuren 1** und **2a****-2b** kann es vorkommen, dass die Rollen 3, vor allem unter Last und bei längeren Stützbereichen 11, sich verkanten oder an einem Rand auflaufen und dabei beschädigt werden. Zur Behebung kann bei solchen und anderen Stützvorrichtungen 12 eine erfindungsgemässe Vertiefung 82 realisiert werden, wie anhand der **Figuren 5** bis **9** ausgeführt wird.

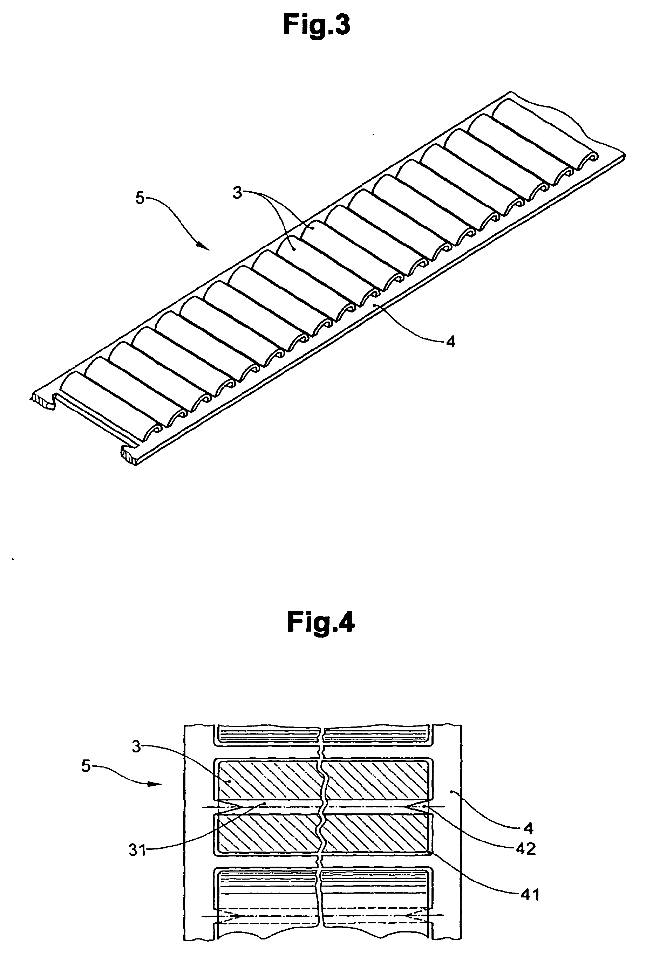

**Figur 3** zeigt einen Abschnitt eines Rollenkörpers 5 mit einem Verbindungskörper 4 und darin eingesetzten Rollen 3. Der Verbindungskörper 4 ist beispielsweise ein flexibel und vorzugsweise auch elastisches Band, in welches die Rollen 3 eingesetzt und gelagert sind. Im hier gezeigten Verbindungskörper 4 liegt eine Reihe von Rollen 3 vor, es können aber auch Verbindungskörper 4 mit mehreren parallel laufenden Reihen von Rollen 3 vorliegen, oder Verbindungskörpern 4 mit einer Folge von Rollen, mit jeweils mehreren Rollen seitlich nebeneinander, in welcher aufeinanderfolgende Rollen seitlich gegeneinander versetzt sind.

**Figur 4** zeigt einen Ausschnitt eines Rollenkörpers 5, mit einem Längsschnitt durch eine Rolle 3. Der Verbindungskörper 4 weist Öffnungen 41 auf, an welchen Lagerstellen 42 ausgebildet sind, mittels welcher die Rollen 3 gelagert sind. Die Lagerstellen 42 können, wie dargestellt, Ausbuchtungen des Verbindungskörpers 4 sein, welche in korrespondierend geformte Einbuchtungen oder Aussparungen der Rollen 3 eingreifen. Die Aussparungen der Rollen 3 können wie dargestellt als durchgehende Löcher 31 ausgebildet sein, d.h. dass die Rollen 3 als Hülsen oder Rohrstücke geformt sind. Alternativ können die Aussparungen lediglich als rotationssymmetrische Vertiefungen an den Enden der Rollen ausgebildet sein. Vorzugsweise sind die Vertiefungen sich nach innen verjüngend geformt. Dabei sind die Rollen 3 vorzugsweise als (Kunststoff)-Spritzgussteile geformt. Umgekehrt können die Rollen 3 vorstehende Achselemente aufweisen, welche in Öffnungen des Verbindungskörpers 4 einsetzbar sind.

**Figuren 5a** und **5b** zeigen eine Stützvorrichtung 12 mit Vertiefungen 82 zur Entlastung und zum Ausrichten der Rollen 3. Die Proportionen der Stützvorrichtung 12 sind anders als bei jener der Figur 2, die Funktionsweise ist jedoch dieselbe. Ferner sind nicht alle Rollen 3 entlang der Umlaufbahn um den Zentralkörper 73 gezeichnet; in Wirklichkeit liegen also Rollen 3 entlang der ganzen Umlaufbahn vor. **Figur 5a** zeigt eine seitliche Ansicht bei entferntem Seitenelement 74, und **Figur 5b** einen Querschnitt B-B im Bereich einer Vertiefung 82. Die Stützfläche 72 ist am Zentralkörper 73 ausgebildet. Die Vertiefungen 82 sind beispielhaft in separaten Entlastungselementen 8 ausgebildet. Ein Abstand zwischen den Vertiefungen 82 ist vorzugsweise nicht gleich einem ganzzahligen Vielfachen der Teilung des Rollenkörpers 5, also des Abstandes T der Rollen. Auch hier gilt vorzugsweise, beim Einsatz einer Mattenkette anstelle des Bandes 6, dass auch die Teilung der Mattenkette nicht gleich oder nicht gleich einem ganzzahligen Vielfachen der Teilung T des Rollenkörpers 5 ist, und umgekehrt die Teilung T des Rollenkörpers 5 nicht gleich einem ganzzahligen Vielfachen der Teilung der Mattenkette ist.

Im Stützbereich 11 stützt die Stützfläche 72 die Rollen 3 und damit auch, direkt oder via das Band 6, das Fördermittel oder Fördergut (nicht gezeichnet). Im Bereich der Vertiefung 82 sind die jeweils dort befindlichen Rollen 3 entlastet. Die Rollen 3 bewegen sich dort, aufgrund der Schwerkraft und/oder mittels einer seitlichen Führung der Rollen 3, etwas von dem Band 6 weg nach unten. Dadurch sind sie leichter beweglich und können sich, falls sie im lasttragenden Bereich mit ihrer Drehachse in eine schräge Position gelangt sind, wieder ausrichten, d.h. so, dass ihre Drehachse senkrecht zur Abrollrichtung der Rollen 3 verläuft.

In der schematischen Darstellung der **Figur 5a** sind die lasttragenden Bereiche, also die Bereiche des Stützbereiches 11 zwischen der Vertiefung 82 und den Umlenkbereichen an den beiden Enden der Stützvorrichtung 12, relativ kurz gezeichnet. Sie können auch, relativ zum Bereich der Vertiefung 82, länger sein. Die Stützvorrichtung 12 gemäss den **Figuren 5a-5b** weist umlaufende Rollen 3 auf. In analoger Weise kann natürlich auch eine Stützvorrichtung mit nicht umlaufenden oder nur mit rein linear bewegten Rollen mit einer Vertiefung 82 versehen sein. Dabei wirkt sich die Symmetrie der Vertiefung 82 in Abrollrichtung aus, indem ungeachtet der Abrollrichtung die gleiche Wirkung auftritt.

Die Vertiefungen 82 sind in den **Figuren 5a** und **5b** als gesonderte Elemente oder Entlastungselemente 8 gezeichnet. Sie können in anderen Ausführungsformen der Erfindung aber auch an der Stützfläche 72 und an den Seitenelementen 74 ausgebildet sein, also ohne dass ein separates Bauteil zur Ausbildung der Vertiefung 82 erforderlich ist.

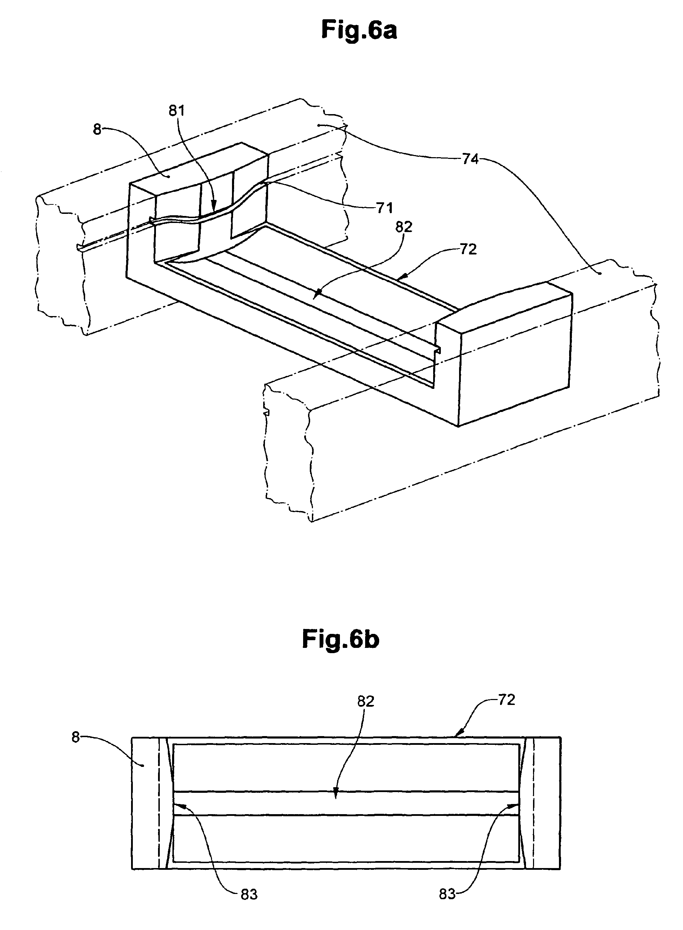

**Figuren 6a** und **6b** zeigen ein Entlastungselement 8 in einer perspektivischen Ansicht und in einer Ansicht von oben, d.h. auf die Stützfläche 72. In der **Figur 6a** ist strichliert die Lage der Seitenelemente 74 bei eingesetztem Entlastungselement 8 angedeutet. Die Stützfläche 72 ist am dargestellten Entlastungselement 8 nur ganz am Rand der Vertiefung 82 sichtbar und geht koplanar in die Stützfläche 72 am Zentralkörper 73 über. Das Entlastungselement 8 kann wie gesagt ein separates Einzelteil sein, oder an einem Abschnitt der Rollenbahn an einem oder mehreren Teilen ausgeformt sein, also beispielsweise am Zentralkörper 73 und an den Seitenelementen 74. Im Bereich der Stützfläche 72 ist also die Vertiefung 82 der Stützfläche 72 ausgebildet, und im Bereich der Führungsnut 71 eine Absenkung 81 der Führungsnut 71. Die Vertiefung 82 der Stützfläche 72 erstreckt sich im Wesentlichen über die ganze Breite der Stützfläche 72, so dass eine Rolle 3 in diesem Bereich nach unten hin bewegbar und somit entlastbar ist. Die Absenkung 81 der Führungsnut 71 unterstützt diese Bewegung, indem ein Verbindungskörper 4 ebenfalls im Bereich der Vertiefung 82 der Stützfläche 72 nach unten geführt wird. Falls die Rollen 3 mittels vorstehender Achselemente in der Führungsnut 71 geführt sind, wirkt deren Absenkung 81 in derselben Weise.

Es können, wie in der **Figur 6a** sichtbar, je nach Länge des Stützbereiches 11, zwei oder mehr Vertiefungen 82 entlang des Stützbereiches 11 angeordnet sein.

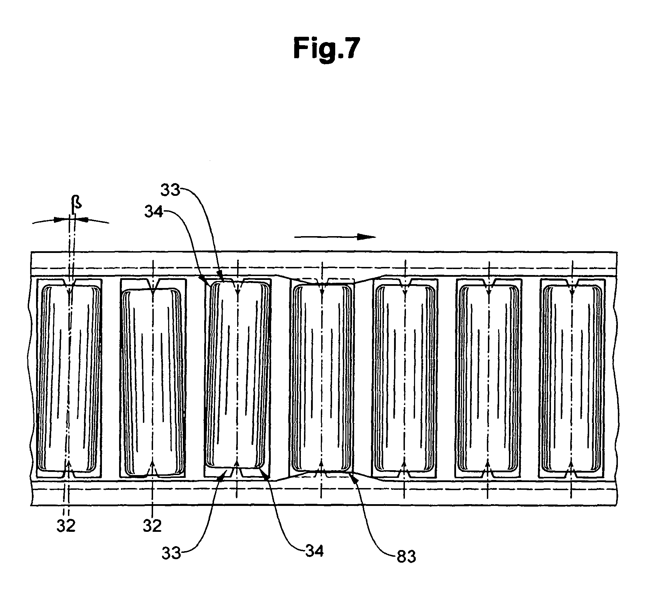

Vorzugsweise liegt zudem im Bereich der Vertiefung 82 eine seitliche Bahnverengung 83 der Rollenbahn vor. Dadurch werden Rollen beim Vorbeifahren seitlich positioniert, insbesondere eingemittet, und wird die Bewegung zur Ausrichtung ihrer Achsen senkrecht zur Förderrichtung unterstützt. **Figur 7** zeigt schematisch das Ausrichten einer Folge von Rollen 3, welche von links nach rechts an einer Vertiefung 82 (selber nicht sichtbar) mit der Bahnverengung 83 vorbei geführt werden. Links der Bahnverengung 83 sind die Rollen 3 mit ihren Achsrichtungen 32 bezüglich des Verbindungskörpers 4 um einen Winkel β verkantet. Die Stirnseiten 33 der Rollen 3 werden durch die Bahnverengung 83 parallel geführt. Das Ausrichten der Rollen 3 beinhaltet also eine Drehung der Richtung 32 der Drehachse der Rollen 3 und/oder eine Verschiebung entlang der Richtung 32 der Drehachse. Fasen 34 oder Abrundungen im Übergangsbereich zwischen den Stirnseiten 33 und den Umfangsflächen der Rollen 3 verhindern ein Verklemmen der Rollen 3 an der Bahnverengung 83.

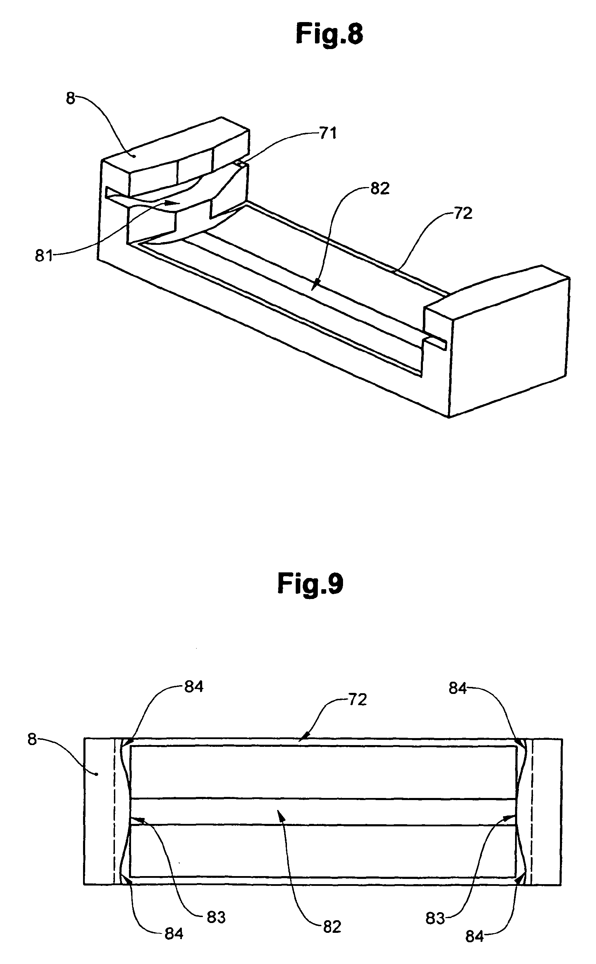

**Figur 8** zeigt eine Variante eines Entlastungselementes 8, in welchem die Absenkung 81 der Führungsnut 71 eine Bewegung der Rollen nach unten, insbesondere wenn sie in einem Verbindungskörper 4 gelagert sind, zwar zulässt, aber nicht erzwingt. Je nach der Spannung, die auf den Verbindungskörper 4 wirkt, und je nach dem Gewicht der Rollen 3 kann die Rolle 3 ein wenig nach unten ausweichen. Die Rolle kann schon dadurch ausgerichtet werden, dass sie unbelastet in der Lagerung im Verbindungskörper 4 hängt. Zudem kann die Rolle 3 auch ausgerichtet werden, wenn sie derart hängend zwar nicht den tiefsten Punkt der Vertiefung 82 berührt, aber auf den ansteigenden Bereich der Vertiefung 82 trifft. In einer weiteren bevorzugten Ausführungsform der Erfindung verläuft die Führungsnut 71 ohne Absenkung 81 geradeaus, und geschieht die Ausrichtung der Rollen 3 dadurch, dass die Rollen 3 dank der Vertiefung 82 unbelastet in ihrer Lagerung im Verbindungskörper 4 hängen.

**Figur 9** zeigt ein Entlastungselement 8, in welchem anschliessend an die Bahnverengung 83 auch eine oder zwei Bahnerweiterungen 84 ausgebildet sind. Dies ermöglicht, dass die Rollen, falls sie mit ihren Stirnseiten 33 mit den Seitenelementen 74 in Kontakt sind, dank den Bahnerweiterungen 84 zunächst frei von Reibkräften sind, welche das Verkanten unterstützten. Dadurch richten sich die Rollen 3 mit ihren Achsen aus. Anschliessend werden sie mittels der Bahnverengung 83 zentriert.

Die gezeigte Stützvorrichtung 12 lässt sich im Prinzip in beliebiger Grösse realisieren. Bei einem Einsatz in der Fördertechnik sind Rollendurchmesser um ca. 10 mm bis 20 mm oder 30 mm, und Rollenlängen von 20 mm bis 100 mm zweckmässig. Vorzugsweise sind dabei die Rollen aus Kunststoff.

### BEZUGSZEICHENLISTE

- 1: Fördereinrichtung
- 11: Stützbereich
- 12: Stützvorrichtung
- 2: Fördermittel
- 21: Umlenkrolle
- 3: Rolle
- 31: Aussparung
- 32: Achsrichtung
- 33: Stirnseite
- 34: Fase
- 4: Verbindungskörper
- 41: Öffnung
- 42: Ausbuchtung

- 5: Rollenkörper
- 6: Band
- 7: Stützkörper
- 71: Führungsnut
- 72: Stützfläche
- 73: Zentralkörper
- 74: Seitenelement
- 8: Entlastungselement
- 81: Absenkung der Führungsnut
- 82: Vertiefung der Stützfläche
- 83: Bahnverengung
- 84: Bahnerweiterung
- 10: Fördergut

## Patentansprüche

1. Verfahren zum Betrieb einer Stützvorrichtung (12) zum Stützen von geförderten Gegenständen (2, 10), bei welchem ein Rollenkörper (5), aufweisend eine Folge von Rollen (3) welche entlang einer Bahn rollen, in einem Stützbereich (11) die geförderten Gegenstände (2, 10) stützt, wobei die Rollen (3) im Stützbereich (11) auf einer Stützfläche (72) abrollen, **dadurch gekennzeichnet, dass** das Verfahren die Schritte aufweist:
• Entlasten der Rollen (3) beim Eintreten in einen Teilbereich des Stützbereiches (11);
• Ausrichten der entlasteten Rollen (3);
• erneutes Belasten der Rollen (3) beim Verlassen des Teilbereiches des Stützbereiches (11).

2. Verfahren gemäss Anspruch 1, wobei die Schritte Entlasten-Ausrichten-Belasten für eine entlang des Stützbereiches (11) bewegte Rolle (3) mehrmals wiederholt werden.

3. Verfahren gemäss Anspruch 1 oder 2, wobei das Ausrichten der entlasteten Rollen (3) durch das Eigengewicht der Rollen (3) getrieben wird, und/oder das Ausrichten der entlasteten Rollen (3) durch mechanische Führung der Rollen (3) getrieben wird.

4. Verfahren gemäss einem der bisherigen Ansprüche, wobei das Ausrichten eine Drehung der Achsrichtung (32) der Drehachse der Rollen (3) und/oder eine Verschiebung entlang der Achsrichtung (32) der Drehachse beinhaltet.

5. Verfahren gemäss einem der bisherigen Ansprüche, wobei die Rollen (3) endlos in der Stützvorrichtung (12) umlaufen.

6. Verfahren gemäss einem der bisherigen Ansprüche, wobei die Rollen (3) in der Stützvorrichtung (12) eine Hin- und Her-Bewegung ausführen.

7. Stützvorrichtung (12) zum Stützen von geförderten Gegenständen (2, 10), aufweisend einen Rollenkörper (5) mit einer Folge von Rollen (3), welche entlang einer Bahn rollen und in einem Stützbereich (11) die geförderten Gegenstände (2, 10) stützen, wobei die Rollen (3) im Stützbereich (11) auf einer Stützfläche (72) abrollen, **dadurch gekennzeichnet, dass** in einem Teilbereich des Stützbereiches (11) Mittel zum Entlasten, Ausrichten und erneuten Belasten der Rollen (3) vorgesehen sind.

8. Stützvorrichtung (12) gemäss Anspruch 7, wobei als Mittel zum Entlasten, Ausrichten und erneuten Belasten mindestens eine Vertiefung (82) der Stützfläche (72) vorliegt, und eine Rolle (3), welche sich im Bereich der Vertiefung (82) befindet, in die Vertiefung (82) hinein bewegbar ist.

9. Stützvorrichtung (12) gemäss Anspruch 8, wobei die Vertiefung (82), in einem Längsschnitt entlang einer Förderrichtung oder Abrollrichtung der Rollen (3) gesehen, einen stetigen Verlauf aufweist.

10. Stützvorrichtung (12) gemäss einem der Ansprüche 8 bis 9, wobei die Vertiefung (82), in einem Längsschnitt entlang einer Förderrichtung oder Abrollrichtung der Rollen (3) gesehen, symmetrisch geformt ist.

11. Stützvorrichtung (12) gemäss einem der Ansprüche 8 bis 10, wobei die Vertiefung (82), entlang der Förderrichtung oder Abrollrichtung der Rollen (3) gesehen, eine Ausdehnung von weniger als dem Dreifachen, vorzugsweise weniger als dem Doppelten des Durchmessers einer Rolle 3 aufweist.

12. Stützvorrichtung (12) gemäss einem der Ansprüche 7 bis 11, wobei als Mittel zum Entlasten, Ausrichten und erneuten Belasten mindestens weitere Stützelemente vorliegen, vorzugsweise weitere, stationäre oder mitlaufende Rollen (3), welche in dem Teilbereich die geförderten Gegenstände vorübergehend relativ zur der Stützfläche (72) anheben.

13. Stützvorrichtung (12) gemäss einem der Ansprüche 7 bis 12, wobei die Rollen (3) zylindrisch oder tonnenförmig geformt sind.

14. Stützvorrichtung (12) gemäss einem der Ansprüche 7 bis 13, aufweisend eine Bahnverengung (83) zur seitlichen Positionierung der Rollen (3), insbesondere im Bereich der Vertiefung (82).

15. Stützvorrichtung (12) gemäss einem der Ansprüche 7 bis 14, aufweisend eine Bahnerweiterung (84), welche den Rollen (3) einen grösseren seitlichen Bewegungsspielraum als im übrigen Stützbereich (11) erlaubt.

16. Stützvorrichtung (12) gemäss einem der Ansprüche 7 bis 15, wobei die Rollen (3) an einem Übergang zwischen den Stirnseiten und der Umfangsfläche eine Abrundung oder eine Fase (34) aufweisen.

17. Stützvorrichtung (12) gemäss einem der Ansprüche 7 bis 16, wobei zumindest im Stützbereich (11) ein Fördermittel (2) an den Rollen (3) abrollt, wobei dieses Fördermittel (2) ein Förderband oder eine Mattenkette ist.

## Claims

1. A method for operating a support device (12) for supporting conveyed objects (2, 10), with which a roller body (5), comprising a series of rollers (3) which roll along a path, supports the conveyed objects (2, 10) in a support region (11), wherein the rollers (3) in the support region (11) roll on a support surface (72), **characterised in that** the method comprises the steps:
• relieving the rollers (3) on entering into a part region of the support region (11);
• aligning the relieved rollers (3);
• renewed loading of the rollers (3) on leaving the part region of the support device (11).

2. A method according to claim 1, wherein the steps of relieving-aligning-loading are repeated several times for a roller (3) moved along the support region (11).

3. A method according to claim 1 or 2, wherein the alignment of the relieved rollers (3) is driven by the intrinsic weight of the rollers (3), and/or the alignment of the relieved rollers (3) is driven by mechanical guiding of the rollers (3).

4. A method according to one of the preceding claims, wherein the alignment includes a rotation of the axis direction (32) of the rotation axis of the rollers (3) and/or a displacement along the axis direction (32) of the rotation axis.

5. A method according to one of the preceding claims, wherein the rollers (3) revolve endlessly in the support device (12).

6. A method according to one of the preceding claims, wherein the rollers (3) execute a to and fro moment in the support device (12).

7. A support device (12) for supporting conveyed objects (2, 10), comprising a roller body (5) with a series of rollers (3), which roll along a path and support the conveyed objects (2, 10) in a support region (11), wherein the rollers (3) in the support region (11) roll on a support surface (72), **characterised in that** means for relieving, aligning and renewed loading of the rollers (3) are provided in a part region of the support device (11).

8. A support device (12) according to claim 7, wherein at least one recess (82) of the support surface (72) is present as a means for relieving, aligning and renewed loading, and a roller (3) which is located in the region of the recess (82), may be moved into the recess (82).

9. A support device (12) according to claim 8, wherein the recess (82), seen in a longitudinal section along a conveying direction or rolling direction of the rollers (3), has a continuous course.

10. A support device (12) according to one of the claims 8 to 9, wherein the recess (82), seen in a longitudinal section along a conveying direction or rolling direction of the rollers (3), is shaped in a symmetrical manner.

11. A support device (12) according to one of the claims 8 to 10, wherein the recess (82), seen along the conveying direction or rolling direction of the rollers (3), has an extension of less than triple, preferably less than double the diameter of a roller (3).

12. A support device (12) according to one of the claims 7 to 11, wherein at least further support elements are present as means for relieving, aligning and renewed loading, preferably further, stationary or co-running rollers (3), which lift the conveyed objects temporarily relative to the support surface (72), in the part region.

13. A support device (12) according to one of the claims 7 to 12, wherein the rollers (3) are shaped in a cylindrical or barrel-like manner.

14. A support device (12) according to one of the claims 7 to 13, comprising a path narrowing (83) for the lateral positioning of the rollers (3), in particular in the region of the recess (82).

15. A support device (12) according to one of the claims 7 to 14, comprising a path widening (84), which permits the rollers (3) a greater lateral movement clearance than in the remaining support region (11).

16. A support device (12) according to one of the claims 7 to 15, wherein the rollers (3) at a transition between the end-sides and the peripheral surface, have a rounding or a chamfer (34).

17. A support device (12) according to one of the claims 7 to 16, wherein at least in the support region (11), a conveyor means (2) rolls on the rollers (3), wherein this conveyor means (2) is a conveyor belt or a mat chain.

## Revendications

1. Procédé de conduite d'un dispositif de soutien (12) qui soutient des objets (2, 10) transportés, procédé dans lequel un corps de roulement (5) qui présente une succession de galets (3) qui roulent sur une piste soutient dans une zone de soutien (11) les objets (2, 10) transportés, les galets (3) roulant sur une surface de soutien (72) dans la zone de soutien (11),
**caractérisé en ce que**
le procédé comporte les étapes suivantes :
- délestage des galets (3) lorsqu'ils entrent dans une partie de la zone de soutien (11),
- alignement des galets (3) délestés et
- remise en charge des galets (3) lorsqu'ils quittent la partie de la zone de soutien (11).

2. Procédé selon la revendication 1, dans lequel les étapes de délestage, d'alignement et de remise en charge d'un galet (3) déplacé le long de la zone de soutien (11) sont répétées plusieurs fois.

3. Procédé selon les revendications 1 ou 2, dans lequel l'alignement des galets (3) délestés est entraîné par le poids propre des galets (3) et/ou en ce que l'alignement des galets (3) délestés est entraîné par guidage mécanique des galets (3).

4. Procédé selon l'une des revendications précédentes, dans lequel l'alignement implique une rotation de la direction (32) de l'axe de rotation des galets (3) et/ou un coulissement le long de la direction (32) de l'axe de rotation.

5. Procédé selon l'une des revendications précédentes, dans lequel les galets (3) circulent sans fin dans le dispositif de soutien (12).

6. Procédé selon l'une des revendications précédentes, dans lequel les galets exécutent un déplacement en va-et-vient dans le dispositif de soutien (12).

7. Dispositif de soutien (12) destiné à soutenir des objets (2, 10) transportés, le dispositif présentant un corps de roulement (5) doté d'une succession de galets (3) qui roulent sur une piste et soutiennent dans une zone de soutien (11) les objets (2, 10) transportés, les galets (3) roulant sur une surface de soutien (72) dans la zone de soutien (11),
**caractérisé en ce que**
des moyens de délestage, d'alignement et de remise en charge des galets (3) sont prévus dans une partie de la zone de soutien (11).

8. Dispositif de soutien (12) selon la revendication 7, dans lequel au moins un creux (82) de la surface de soutien (72) sert de moyen de délestage, d'alignement et de remise en charge et dans lequel un galet (3) situé au niveau du creux (82) peut être déplacé jusque dans le creux (82).

9. Dispositif de soutien (12) selon la revendication 8, dans lequel vu en coupe longitudinale dans la direction de transport ou la direction de roulement des galets (3), le creux (82) a une extension constante.

10. Dispositif de soutien (12) selon l'une des revendications 8 et 9, dans lequel vu en coupe longitudinale dans la direction du transport ou dans la direction de roulement des galets (3), le creux (82) a une forme symétrique.

11. Dispositif de soutien (12) selon l'une des revendications 8 à 10, dans lequel vu dans la direction de transport ou la direction de roulement des galets (3), le creux (82) présente une extension inférieure au triple et de préférence inférieure au double du diamètre d'un galet (3).

12. Dispositif de soutien (12) selon l'une des revendications 7 à 11, dans lequel au moins d'autres éléments de soutien, de préférence d'autres galets (3) stationnaires ou entraînés qui, dans la partie, relèvent temporairement par rapport à la surface de soutien (72) les objets transportés, servent de moyens de délestage, d'alignement et de remise en charge.

13. Dispositif de soutien (12) selon l'une des revendications 7 à 12, dans lequel les galets (3) ont une forme cylindrique ou la forme d'un tonneau.

14. Dispositif de soutien (12) selon l'une des revendications 7 à 13, présentant un rétrécissement (83) de la piste qui permet le positionnement latéral des galets (3) en particulier au niveau du creux (82).

15. Dispositif de soutien (12) selon l'une des revendications 7 à 14, présentant un élargissement (84) de la piste qui donne aux galets (3) un jeu de déplacement latéral plus grand que dans le reste de la zone de soutien (11).

16. Dispositif de soutien (12) selon l'une des revendications 7 à 15, dans lequel les galets (3) présentent un arrondi ou un chanfrein (34) à la transition entre leurs côtés frontaux et leur surface périphérique.

17. Dispositif de soutien (12) selon l'une des revendications 7 à 16, dans lequel un moyen de transport (2) roule sur les galets (3) au moins dans la zone de soutien (11), ce moyen de transport (2) étant une bande transporteuse ou une chaîne de nattes.
